# EUROPÄISCHE PATENTSCHRIFT

(11) **EP 3 157 654 B1**
(45) Veröffentlichungstag und Bekanntmachung des Hinweises auf die Patenterteilung: **22.04.2020**
(21) Anmeldenummer: 15729483.6
(22) Anmeldetag: 17.06.2015
(51) Int. Cl.: B01D 46/42

(54) **FILTER UND FILTEREINSATZ**
FILTER AND FILTER CARTRIDGE
FILTRE ET CARTOUCHE FILTRANTE

(30) Priorität: 18.06.2014 DE 202014004894 U; 18.06.2014 DE 202014004897 U; 11.11.2014 DE 202014008899 U
(43) Veröffentlichungstag der Anmeldung: 26.04.2017
(73) Patentinhaber: Mann+Hummel GmbH, 71636 Ludwigsburg (DE)
(72) Erfinder: KAUFMANN, Michael, 67149 Meckenheim (DE); RUHLAND, Klaus-Dieter, 67149 Meckenheim (DE)
(74) Vertreter: Seyboth, Matthias
(86) Internationale Anmeldenummer: PCT/EP2015/063592
(87) Internationale Veröffentlichungsnummer: WO 2015/193372

(56) Entgegenhaltungen:
- WO-A1-2009/106593
- WO-A1-2010/114906
- DE-A1-102005 031 058
- DE-A1-102009 060 214
- DE-U1- 8 808 632
- US-A1- 2008 307 759
- US-A1- 2010 043 366
- US-A1- 2011 011 782
- US-A1- 2014 130 467
- US-B1- 6 200 465

## Beschreibung

### Technisches Gebiet

Die vorliegende Erfindung betrifft einen Filter, insbesondere für Brennkraftmaschinen, zur Filterung eines Fluids, insbesondere von Luft, sowie einen Filtereinsatz, insbesondere für einen solchen Filter.

### Stand der Technik

Insbesondere bei Bau- und Landmaschinen gewinnt die Motorluftfiltration zunehmend an Bedeutung. Zum einen werden immer leistungsfähigere Luftfilter eingesetzt, da höhere Motorleistungen und strengere Emissionsrichtlinien einen erhöhten Luftdurchsatz durch den Motor erfordern. Zum anderen vergrößert sich die Anzahl an Baugruppen, die standardmäßig verbaut werden, wie etwa Klimaanlagen. Dies verringert den zur Verfügung stehenden Bauraum im Fahrzeug. Schließlich besteht das Bestreben, Fahrzeuge kleiner und leichter zu gestalten, was ebenfalls zu Lasten des zur Verfügung stehenden Bauraums geht.

Bei der immer höher werdenden Integration ist eine besonders hohe Zuverlässigkeit jedes Bauteils eines solchen Filters für lange Wartungsintervalle von Bedeutung. Bei den genannten Einsatzbereichen erfordern neben den hohen Fluiddurchsätzen auch hohe mechanische Beanspruchungen wie beispielsweise durch Vibrationen eine besonders stabile Bauweise des Gesamtsystems.

Aus US 2011/011782A1 ist ein Filterelement mit gefaltetem Filtermedium bekannt, welches dichtend in einen Rahmen eingebettet ist. Der Rahmen weist eine Vorderkante und eine Hinterkante zur Festlegung der Orientierung beim Einbau in ein Gehäuse auf. Weiterhin ist der Rahmen mit einer Ausbau-Hilfs-Einrichtung ausgestattet.

In US 6 200 465 B1 wird vorgeschlagen, zur einfacheren Entnahme eines Luftfilters aus dem Gehäuse zwischen einer angeschäumten Dichtung und einem Metallgitter, welches die Abströmseite eines Faltenbalgs bedeckt, einen flexiblen Streifen anzubringen, der als Fingergriff dient.

WO 2010/114906 A1 offenbart einen Luftfilter mit einem Kompaktfilterelement, auf dessen Abströmseite ein Basiselement eines Rahmens angebracht ist. Das Basiselement weist eine Anlagefläche für eine Dichtung auf und umfasst weiterhin zwei gegenüberliegend und beabstandet angeordnete Flügel, die sich in unterschiedliche Richtungen wie die Dichtfläche erstrecken und durch die Abströmfläche in den Filtermediumkörper eingebettet sind. Hierdurch kann das Filterelement austauschbar in einer Kassette angeordnet werden und einen austauschbaren Einsatz für ein Filtergehäuse bilden.

Es ist eine Aufgabe der Erfindung, einen Filtereinsatz, insbesondere ein Sekundärelement anzugeben, der durch eine robuste Bauweise eine besonders hohe Zuverlässigkeit aufweist.

Neben den äußeren Abmessungen eines Luftfilters, dem maximal möglichen Luftdurchsatz und der Standzeit eines Filters ist der durch den Luftfilter hervorgerufene Druckabfall eine entscheidende Kerngröße bei der Beurteilung der Leistungsfähigkeit eines Luftfilters.

Es ist eine weitere Aufgabe der Erfindung, den Druckabfall eines Filtereinsatzes für einen Filter bei gegebener Außengeometrie so gering wie möglich zu gestalten.

Die oben genannten Aufgaben werden jeweils durch verschiedene Aspekte der im Folgenden beschriebenen Ausführungsformen eines Filters, insbesondere für Brennkraftmaschinen, zur Filterung eines Fluids, insbesondere von Luft, sowie eines Filtereinsatzes, insbesondere für einen solchen Filter, gelöst. Die verschiedenen Aspekte können wie aus den Ausführungsbeispielen ersichtlich einzeln oder kombiniert vorteilhaft in Ausführungsformen enthalten sein, wobei bei Kombination einzelne Aspekte die Vorteile anderer Aspekte unterstützen und ein synergistisches Zusammenwirken zu einem vorteilhaften Produkt führt.

### Offenbarung der Erfindung

Die Aufgabe wird durch einen Filtereinsatz, insbesondere Sekundärfiltereinsatz für einen Filter zur Filterung eines Fluids, insbesondere von Luft, insbesondere für eine Brennkraftmaschine gemäß Anspruch 1 gelöst. Weitere Ausgestaltungen der Erfindung sind in den Unteransprüchen 2-10 angegeben.

Erfindungsgemäß ist vorgesehen, dass der Filtereinsatz eine Hauptanströmfläche, eine Abströmfläche und eine Hauptströmungsrichtung aufweist. Ferner weist der Filtereinsatz einen Filterkörper, der entlang der Hauptströmungsrichtung durchströmbar ist, sowie einen den Filterkörper tragenden Filtereinsatzrahmen auf. Der Filtereinsatzrahmen weist eine Dichtung zur Trennung eines Filterinnenraums eines Filters in Reinseite und Rohseite sowie anströmseitig einen Griffbereich auf. Der Griffbereich ist so ausgelegt, dass eine Anströmung des Filterkörpers über den Griffbereich und eine manuelle Entnahme des Filtereinsatzes möglich ist. Auf diese Weise wird der Bereich vergrößert, über den der Filterkörper angeströmt werden kann. Nachdem in der Regel ohnehin eine Möglichkeit zur manuellen Handhabung des Filtereinsatzes, insbesondere bei Einbau und Ausbau des Filtereinsatzes, vorzusehen ist, wird durch die Auslegung des Griffbereichs für ein Durchströmen des zu filternden Fluids der durch den Filtereinsatz hervorgerufene Druckabfall oder Druckverlust signifikant verringert.

Erfindungsgemäß ist seitlich zu der Hauptanströmfläche eine Nebenanströmfläche vorgesehen. Dies erschließt der generell verbesserten Anströmsituation des Filtereinsatzes eine weitere Anströmfläche des Filtereinsatzes und reduziert somit den Druckverlust durch den Filtereinsatz weiter. Dabei ist vorgesehen, dass der Griffbereich ein Anströmen des Filterkörpers seitlich neben der Hauptanströmfläche ermöglicht.

Der Griffbereich ist als Griffmulde ausgebildet, und die Griffmulde zeigt zu dem Filterkörper. Zum einen bietet die Griffmulde eine besonders einfache Möglichkeit, den Filtereinsatz aus seiner eingesetzten Position herauszunehmen. Andererseits ermöglicht die Form einer Mulde eine besonders verwirbelungsfreie Zuströmung des Fluids zu dem Filterkörper, insbesondere zu der Hauptanströmfläche und der Nebenanströmfläche.

Bei einer Ausgestaltung der Erfindung ist vorgesehen, dass in Hauptströmungsrichtung der Griffbereich im Wesentlichen nicht über die Anströmfläche hinaus ragt. Ebenfalls kann der Filterkörper im Wesentlichen quaderförmig ausgebildet sein.

Der Filterkörper ist als zickzackförmig gefalteter Filterbalg ausgebildet. Bei einer Ausgestaltung zeigt eine der Stirnseiten der Filterbalgfalten (d.h. die durch den zickzackförmigen Verlauf des gefalteten Filtermediums gebildeten Seitenflächen) in Richtung des Griffbereichs. Durch die erfindungsgemäße Ausgestaltung des Griffbereichs, der zu dieser Stirnseite offen ist, wird das strömende Fluid den Stirnseiten der Filterbalgfalten zugeleitet. Bei einer einseitigen Abdichtung der Stirnseiten nur auf der Reinseite des gefalteten Filtermediums bleibt die Stirnseite teilweise an den rohseitigen, nicht verklebten Spalten zwischen den Falten offen. So kann das Fluid an der Stirnseite in das Innere des Filterbalgs gelangen, ohne dass ein Umströmen des Filterkörpers auftritt. Auf diese Weise kann neben der regulären Hauptanströmfläche, welche durch die Faltkanten gebildet wird, die Stirnseite des Filterbalgs als Nebenanströmfläche dienen und damit den Druckverlust minimieren.

Bei einer besonders bevorzugten Ausführungsform der Erfindung ist der Filtereinsatz als Sekundärfiltereinsatz ausgelegt. Da insbesondere der im nach dem Hauptfiltereinsatz gelegene Bauraum besonders knapp bemessen ist und nicht immer eine zu der gesamten Abströmfläche des Hauptfiltereinsatzes äquivalente Anströmfläche an dem Sekundärfiltereinsatz realisieren lässt, ist eine zusätzliche Nebenanströmfläche von besonders hoher Bedeutung für die Optimierung des gesamten Filtersystems.

Bei einer erfindungsgemäßen Weiterbildung der Erfindung ist vorgesehen, dass der Filtereinsatzrahmen abströmseitig ein die Abströmfläche überdeckendes Gitter aufweist. Insbesondere bei hohen Druckdifferenzen oder bei einem Wechsel des Hauptfilterelements im Betrieb ist ein besonders hoher Kollapsdruck eines Sekundärfiltereinsatzes wichtig. Diese wird durch das Vorsehen eines abströmseitigen Gitters entscheidend verbessert.

Das Gitter kann bevorzugt einteilig mit dem Filtereinsatzrahmen ausgebildet sein.

Der erfindungsgemäße Sekundärfiltereinsatz ist dazu ausgelegt, stromabwärts eines Hauptfiltereinsatzes in einen Filter eingesetzt zu werden. Er weist eine Anströmfläche, eine Abströmfläche und eine Abströmungsrichtung auf. Ferner weist der Sekundärfiltereinsatz einen Filterkörper, der entlang der Abströmungsrichtung durchströmbar ist, und einen den Filterkörper tragenden Filtereinsatzrahmen auf. Der Filtereinsatzrahmen weist eine Dichtung zur Trennung eines Filterinnenraums eines Filters in Reinseite und Rohseite als auch eine Verklebung zwischen dem Filterkörper und dem Filtereinsatzrahmen auf. Das separate Ausführen von Dichtung und Verklebung erlaubt eine wesentlich stabilere Ausgestaltung der Verklebung.

Bei einer bevorzugten Ausgestaltung der Erfindung ist die Dichtung radial zur Hauptströmungsrichtung wirkend ausgelegt und läuft insbesondere im Wesentlichen senkrecht zur Hauptströmungsrichtung um den Sekundärfiltereinsatz um. Die Dichtung kann ein Moosgummi aufweisen.

Besonders bevorzugt ist vorgesehen, dass ein Trägerabschnitt des Filtereinsatzrahmens um den Filterkörper umläuft und der Trägerabschnitt an der Innenseite eine Innenkante, insbesondere eine Nut, zur Aufnahme eines Klebematerials der Verklebung aufweist. Dies ermöglicht eine mechanisch besonders stabile Verbindung zwischen dem Filterkörper und dem Filtereinsatzrahmen. Insbesondere kann vorgesehen sein, dass die Tiefe der Nut in Richtung der Hauptströmungsrichtung verläuft.

Bei einer Weiterbildung der Erfindung umläuft ein Dichtungsaufnahmeabschnitt des Filtereinsatzrahmens außen den Filterkörper. Insbesondere bei der Entnahme und dem Einbau des Sekundärfiltereinsatzes werden auf die Dichtung ausgeübte Scherkräfte durch den Dichtungsaufnahmeabschnitt aufgenommen.

Eine Ausführungsform sieht vor, dass die Verklebung ein Polyurethan aufweist und insbesondere geschäumt ist. Insbesondere kann die Verklebung den Filterkörper teilweise durchdringen und so für eine besonders feste Verklebung zwischen Filterkörper und Filtereinsatzrahmen sorgen.

Die Aufgabe wird auch durch einen Filter zur Filterung eines Fluids, insbesondere von Luft, insbesondere für eine Brennkraftmaschine, gemäß Anspruch 11 gelöst. Weitere Ausgestaltungen der Erfindung sind in den Unteransprüchen 12-15 angegeben.

Der erfindungsgemäße Filter, insbesondere für Brennkraftmaschinen, zur Filterung eines Fluids, insbesondere von Luft, weist ein Filtergehäuse mit einem rohseitigen Bereich und einem reinseitigen Bereich auf. In das Filtergehäuse ist ein Hauptfilterelement einsetzbar, das eine Hauptfilterelement-Anströmfläche, eine Hauptfilterelement-Strömungsrichtung, eine Hauptfilterelement-Abströmfläche sowie eine auf einer Dichtfläche angeordnete Dichtung aufweist. Beispielsweise kann das Hauptfilterelement eine prismatische Grundform aufweisen. Insbesondere kann eine Durchströmung der Mantelflächen erfolgen. Die Dichtung dient zur fluiddichten Trennung des rohseitigen Bereichs des Filtergehäuses von dem reinseitigen Bereich des Filtergehäuses. Ferner weist der Filter ein stromabwärts des Hauptfilterelements angeordnetes Sekundärfilterelement mit einer Sekundärfilterelement-Anströmfläche, einer Sekundärfilterelement-Strömungsrichtung und einer Sekundärfilterelement-Abströmfläche auf. Die Dichtfläche ist schräg zur Hauptströmungsrichtung des Hauptfilterelements angeordnet. Die schräge Dichtfläche eröffnet innerhalb des Filtergehäuses stromabwärts des Hauptfilterelements einen Raum, in dem einerseits das Sekundärfilterelement angeordnet sein kann. Gleichzeitig wird durch die zur Hauptströmungsrichtung schrägstehende Dichtfläche bereits im Filtergehäuse eine Umlenkung der Hauptströmungsrichtung vorgenommen. Somit kann bei geeigneter Anbringung einer Abströmöffnung an dem Filtergehäuse eine Umlenkung des Fluidstroms in die gewünschte Richtung erfolgen. Es kann auf ansonsten notwendige Rohrkrümmer oder dergleichen nach dem Gehäuse verzichtet werden.

Die Dichtfläche und die Hauptströmungsrichtung können insbesondere einen Winkel einschließen, der zwischen 85° und 10° liegt. Innerhalb dieses Winkelbereichs stellt sich eine merkbare Umlenkung des Fluidstroms ein.

Eine Ausgestaltung der Erfindung sieht vor, dass die Dichtfläche gekrümmt ist und insbesondere auf einer Zylindermantelfläche liegt. Durch eine von dem Hauptfilterelement aus gesehene konkave Ausgestaltung der Dichtfläche ist der für das Hauptfilterelement zur Verfügung stehende Bauraum optimierbar und bietet bei geeigneter Wahl des Krümmungsradius ausreichend Platz für ein Sekundärelement. Gleichzeitig ist durch die Krümmung der Dichtfläche die Abströmungsrichtung des Filtergehäuses je nach Position der Abströmöffnung besonders einfach festzulegen. Bevorzugt liegt die Achse des Zylinders der Zylindermantelfläche senkrecht zu der Hauptfilterelement-Strömungsrichtung und senkrecht der Sekundärfilterelement-Strömungsrichtung.

Alternativ kann die Dichtfläche in einer Ebene liegen.

Eine bevorzugte Ausgestaltung der Erfindung sieht vor, dass die Dichtfläche und die Hauptfilterelement-Abströmfläche parallel verlaufen. So ergibt sich eine klar definierte Trennebene zwischen der Rohseite und der Reinseite des Filtergehäuses. Gleichzeitig ergibt sich bei einer gekrümmten Ausführung der Dichtungsfläche eine bauraumoptimierte Ausgestaltung des Filterinnenraums und damit des gesamten Filters.

Bevorzugt ist vorgesehen, dass die Sekundärelement-Anströmfläche parallel und beabstandet zu der Dichtfläche verläuft. Somit ist sichergestellt, dass bei einem Wechsel des Sekundärfilterelements die Reinseite des Filtergehäuses nicht verschmutzt wird. Bei einer gekrümmten Ausführung der Dichtfläche ergibt sich eine ebenfalls gekrümmte Sekundärelement-Anströmfläche.

Bei einer bevorzugten Ausgestaltung der Erfindung ist die Grundform des Sekundärfilterelements ein Quader. Dies ermöglicht einen einfachen Aufbau des Sekundärelements, beispielsweise aus einem gerade gefalteten Flachelement, bei welchem die an- und abströmseitigen Faltkanten jeweils Ebenen bilden, die bevorzugt in einem durch die Faltenhöhe definierten Abstand parallel zueinander angeordnet sind.

Alternativ kann die Grundform des Sekundärelements ein Prisma mit einer oder mehreren gekrümmten Mantelflächen sein, wie beispielsweise ein Hohlzylindermantelabschnitt. Dies kann beispielsweise durch einen gekrümmten Flachbalg realisiert werden. Diese Form bietet die Möglichkeit, das Sekundärfilterelement an eine gekrümmte Hauptfilterelement-Abströmfläche anzupassen und so den Bauraum weiter zu optimieren.

In einer bevorzugten Ausführungsform der Erfindung ist die Grundform des Hauptfilterelements ein Prisma. Insbesondere können die Grundfläche und die Deckfläche des Prismas ein Viereck oder ein Fünfeck sein. Das Viereck oder das Fünfeck kann zwei oder drei rechte Winkel, einen spitzen und einen stumpfen Winkel aufweisen. Eine bevorzugte Ausführungsform der Erfindung sieht vor, dass eine Mantelseite des Prismas von außen gesehen konvex gekrümmt ist, so dass sich eine beispielsweise als Zylindermantelfläche ausgebildete Hauptfilterelement-Abströmfläche ergibt.

Eine vorteilhafte Ausführungsform der Erfindung sieht vor, dass das Hauptfilterelement ein Faltenbalg mit zumindest zwei verschiedenen Faltentiefen ist. Mittels zweier verschiedener Faltentiefen kann die zur Hauptströmungsrichtung des Hauptfilterelements geneigte Hauptfilterelement-Abströmfläche an den Faltenstirnseiten realisiert werden. Alternativ kann durch eine kontinuierlich ansteigende Faltenhöhe die zur Abströmungsrichtung des Hauptfilterelements geneigte Hauptfilterelement-Abströmfläche an den Faltenkanten realisiert werden. Die Begriffe Faltentiefe und Faltenhöhe werden hier synonym verwendet.

Eine vorteilhafte Ausgestaltung der Erfindung sieht vor, dass das Filtergehäuse eine Anströmrichtung, eine Abströmrichtung sowie einen Abströmbereich mit einer Abströmöffnung aufweist. An den Abströmbereich ist ein Abströmstutzen befestigbar, wobei der Abströmbereich eine Befestigungsfläche für den Abströmstutzen aufweist und die Befestigungsfläche mit der Hauptfilterelement-Strömungsrichtung einen Winkel von 45° einschließt. Die um 45° zur Hauptströmungsrichtung geneigte Befestigungsfläche befindet sich besonders bevorzugt so am Filtergehäuse angeordnet, dass sie in Hauptfilterelement-Strömungsrichtung gesehen innerhalb des Filtergehäuses liegt, das heißt, sie überragt dieses nicht. Gleichzeitig befindet sich diese Befestigungsfläche senkrecht zur Hauptströmungsrichtung des Hauptfilterelements, also beispielsweise in einer Einführrichtung des Hauptfilterelements gesehen unterhalb des Hauptfilterelements. Ein an dieser Befestigungsfläche angebrachter Abströmstutzen kann nun das abströmende gefilterte Fluid vergleichsweise einfach in beliebige Richtungen verteilen.

Eine besonders bevorzugte Ausführungsform der Erfindung sieht vor, dass der Abströmstutzen so geformt ist, dass sich eine Umlenkung der Strömungsrichtung um 45° ergibt. Auf diese Weise ist lediglich die Orientierung des Abströmstutzens an dem Abströmbereich, insbesondere an der Befestigungsfläche, hinsichtlich der sich endgültig ergebenden Abströmrichtung relevant. Dies ermöglicht in besonders vorteilhafter Weise die Festlegung der Abströmrichtung des gefilterten Fluids mit einem einzigen Bauteil, nämlich dem Abströmstutzen. Durch geeignete Orientierung des Abströmstutzens an der Befestigungsfläche ergibt sich die endgültige Abströmrichtung des Filtergehäuses.

Eine bevorzugte Weiterentwicklung der Erfindung sieht vor, dass der Abströmstutzen einen rotationssymmetrisch ausgebildeten Befestigungsbereich zur Befestigung an der Befestigungsfläche des Filtergehäuses aufweist. Somit kann durch Drehung des Abströmstutzens die endgültige Festlegung der Abströmrichtung des gesamten Filtergehäuses festgelegt werden. Es ergibt sich somit zwischen der Anströmrichtung des Filtergehäuses und der Abströmrichtung des Filtergehäuses ein Winkelbereich zwischen 0° und 90° mit ein und denselben Bauteilen.

In gleicher Weise kann festgelegt sein, dass die Abströmrichtung und die Befestigungsfläche einen Winkel von 45° einschließen.

Eine alternative Weiterentwicklung des Erfindungsgedankens sieht vor, dass die Befestigungsfläche auf einer Zylindermantelfläche liegt. Die Achse des Zylinders liegt dabei vorzugsweise senkrecht zur Hauptströmungsrichtung des Hauptfilterelements. Eine derart gekrümmte Befestigungsfläche ist vorzugsweise mit einem entsprechend gekrümmten Befestigungsbereich eines Abströmstutzens kombiniert. Die Position des Abströmstutzens an dem Abströmbereich legt dann die Abströmrichtung des Filtergehäuses fest.

Vorzugsweise verlaufen die Befestigungsfläche und die Sekundärelement-Abströmfläche parallel. Dies ermöglicht eine extrem hohe Integration und damit Bauraumoptimierung.

Erfindungsgemäß kann bei einer Ausführungsform vorgesehen sein, dass das Hauptfilterelement entlang einer Einführachse in das Filtergehäuse einsetzbar und entnehmbar ist, wobei die Einführachse mit der Hauptströmungsrichtung einen Winkel zwischen 90° und dem Winkel einschließt, den die Dichtfläche und die Hauptströmungsrichtung einschließen. Gemäß dieser Ausführungsform weist das Filtergehäuse einen Deckel auf, der so ausgebildet ist, dass er im in das Filtergehäuse verschließenden Zustand auf das Hauptfilterelement eine Kraft in Richtung der Dichtfläche ausübt. Durch die Schrägstellung der Dichtfläche wird diese Kraft zumindest teilweise in eine Axialkraft umgewandelt, das heißt in eine Kraft, die in Richtung der Hauptströmungsrichtung wirkt. Dies ergibt eine Kraft, die das Hauptfilterelement mit seiner an der Dichtfläche angebrachten Dichtung gegen einen Hauptfilterelementsitz am Filtergehäuse drückt.

Der Hauptfiltereinsatz weist eine Anströmfläche, eine Abströmfläche sowie eine Hauptströmungsrichtung, einen Filterkörper und einen den Filterkörper tragenden, insbesondere austauschbaren Filtereinsatzrahmen auf. Der Filtereinsatzrahmen weist im Bereich der Abströmfläche eine Dichtung zur Trennung eines Filterinnenraums in Reinseite und Rohseite und eine Abstandsstruktur zur Festlegung eines Abstands zwischen dem Filtereinsatzrahmen und einem in Hauptströmungsrichtung stromabwärts anordenbaren weiteren Filtereinsatz auf. Mittels der Abstandstruktur wird ein vorher festgelegter Abstand zwischen Filtereinsatz, der beispielsweise ein Hauptfiltereinsatz sein kann, und einem stromabwärts angeordneten weiteren Filtereinsatz, der beispielsweise in Sekundärfiltereinsatz sein kann, auch unter extremen Einsatzbedingungen wie beispielsweise Vibrationen aufrechterhalten. Dies sorgt dafür, dass der weitere Filtereinsatz sich nicht aus seiner vorgesehenen Position heraus bewegen und damit seine Dichtfunktion und Sicherungsfunktion verlieren kann.

Bei einer Ausgestaltung der Erfindung ist vorgesehen, dass die Abstandsstruktur innerhalb der Dichtung, insbesondere mehrfach entlang der Dichtung und insbesondere am Umfang der Abströmfläche, angeordnet ist. Bei einer solchen Ausgestaltung kann es vorgesehen sein, dass der Außenumfang senkrecht zur Hauptströmungsrichtung des weiteren Filtereinsatzes in Form und Größe der Dichtung folgt und somit eine Abstützfläche für die Abstandsstruktur bietet.

Eine vorteilhafte Ausführung der Erfindung sieht vor, dass die Abströmfläche oder/und eine Dichtfläche der Dichtung mit der Hauptströmungsrichtung einen Winkel zwischen 5° und 45°, insbesondere einen Winkel von 24°±10° und insbesondere einen Winkel von 24°±5° einschließt. Eine derart zur Hauptströmungsrichtung gewinkelte Abströmfläche besitzt eine größere Fläche als die Abströmfläche. Generell bietet die Abwicklung der Abströmfläche oder/und der Dichtfläche die Möglichkeit, bereits eine Umlenkung der Hauptströmungsrichtung innerhalb des Filtereinsatzes oder direkt nachfolgend dem Filtereinsatz vorzunehmen. Dies spart Bauraum und verbessert aufgrund kürzerer Strömungsstrecken den Druckverlust innerhalb des Filters.

Vorteilhafterweise ist die Abstandsstruktur integral mit der Dichtung ausgebildet, insbesondere in die Dichtung eingeformt. Dies ermöglicht beispielsweise die Verwendung des gleichen Materials und die Herstellung der Abstandsstruktur im gleichen Arbeits-schritt wie die Dichtung.

Eine besonders bevorzugte Ausführungsform sieht vor, dass die Abstandsstruktur dazu ausgelegt ist, im eingebauten Zustand des Filtereinsatzes eine Spann- oder Haltekraft auf einen in Hauptströmungsrichtung stromabwärts anordenbaren weiteren Filtereinsatz, insbesondere einen Sekundärfiltereinsatz, auszuüben, wobei die Kraft den weiteren Filtereinsatz in seine Einbauposition drückt. Dies kann beispielsweise dadurch erreicht werden, dass die Abstandsstruktur aus einem elastischen Material hergestellt ist. Wird der Filtereinsatz dann nach dem weiteren Filtereinsatz eingesetzt, kann durch die geeignete Wahl einer entsprechenden Geometrie bereits das Einsetzen eine Kraft auf den weiteren Filtereinsatz ausüben. Dies verbessert wiederum die Zuverlässigkeit des Filters, da der weitere Filtereinsatz dauerhaft einer Kraft ausgesetzt ist, die ihn an seinem vorgesehenen Platz hält.

Bei einer bevorzugten Ausgestaltung der Erfindung wirkt die Dichtung axial in Richtung der Hauptströmungsrichtung. Dies bedeutet, dass die zur Abdichtung aufzubringende Kraft parallel zur Abströmungsrichtung verläuft.

Bei einer Ausführungsform der Erfindung ist der Filterkörper als Filterbalg, insbesondere mit variabler Faltenhöhe, ausgebildet. Mittels der variablen Faltenhöhe kann beispielsweise eine schräg zur Hauptströmungsrichtung verlaufende Abströmfläche realisiert werden. Als variable Faltenhöhe wird ein Aufbau eines zickzackförmig gefalteten Filterkörpers verstanden, bei welchem die Faltenhöhen über eine durch die Aneinanderreihung von Faltkanten definierte Länge des Faltenbalgs nicht konstant ist, sondern sich kontinuierlich oder diskontinuierlich ändert oder in benachbarten Abschnitten unterscheidet. Bevorzugt ändert sich die Höhe der Falten kontinuierlich und weiter bevorzugt linear über die Länge des Balgs.

Der erfindungsgemäße Filter weist ein Filtergehäuse auf, in den ein Hauptfiltereinsatz und ein Sekundärfiltereinsatz einsetzbar sind. Der Hauptfiltereinsatz weist eine Anströmfläche, eine Abströmfläche sowie eine Hauptströmungsrichtung, einen Filterkörper und einen den Filterkörper tragenden Filtereinsatzrahmen auf. Der Sekundärfiltereinsatz ist stromabwärts des Hauptfiltereinsatzes anordenbar. Der Filtereinsatzrahmen weist im Bereich der Abströmfläche eine Dichtung zur Trennung des Filtergehäuses in Reinseite und Rohseite sowie eine Abstandsstruktur zur Festlegung eines Abstands zwischen dem Filtereinsatzrahmen und dem Sekundärfiltereinsatz auf.

Bei einer erfindungsgemäßen Ausführungsform des Filters ist vorgesehen, dass das Filtergehäuse eine Einführrichtung aufweist, die im Wesentlichen senkrecht zur Hauptströmungsrichtung liegt. Dies ermöglicht nach dem Einsetzen des Sekundärfiltereinsatzes ein Einsetzen des Hauptfiltereinsatzes derart, dass der Sekundärfiltereinsatz gegen ein Herausbewegen aus seinem vorgesehenen Sitz blockiert ist.

Bei einer bevorzugten Ausführungsform ist vorgesehen, dass der Sekundärfiltereinsatz eine Dichtung zur Anlage an dem Filtergehäuse aufweist, wobei die Dichtung insbesondere radial zur Durchströmungsrichtung des Sekundärfiltereinsatzes wirkend ausgelegt ist. Es ist somit nicht notwendig, in axialer Verlängerung zur Hauptdurchströmungsrichtung des Sekundärfiltereinsatzes am Filtergehäuse eine Dichtfläche vorzusehen. Vielmehr wirkt die Dichtung senkrecht zur Hauptdurchströmungsrichtung gegen das Filtergehäuse bereits beim Einsetzen in den vorgesehenen Sitz.

### Kurze Beschreibung der Zeichnungen

Die Erfindung wird unter Bezugnahme auf die Zeichnungen näher erläutert. Es zeigen:
- Figur 1: eine perspektivische Schnittansicht einer Ausführungsform eines erfindungsgemäßen Filters mit eingesetztem Hauptfiltereinsatz und Sekundärfiltereinsatz;
- Figur 2: den Filter der Figur 1 ohne eingesetztem Sekundärfiltereinsatz;
- Figur 3: den Filter der Figur 1 ohne eingesetztem Hauptfiltereinsatz;
- Figur 4: den Filter der Figur 1 in einer Querschnittsansicht;
- Figur 5: eine perspektivische Außenansicht des erfindungsgemäßen Filters der Figur 1;
- Figur 6: eine perspektivische Ansicht eines erfindungsgemäßen Sekundärfiltereinsatzes mit Filterkörper;
- Figur 6a: eine perspektivische Ansicht eines alternativen erfindungsgemäßen Sekundärfiltereinsatz-Filterkörpers;
- Fig. 7, 8: perspektivische Ansichten des Sekundärfiltereinsatzes der Figur 6 ohne Filterkörper;
- Figur 9: eine perspektivische Schnittansicht des Filters der Figur 6;
- Figur 10: eine Schnittansicht des Filters der Figur 7;
- Figur 11: eine perspektivische Vorderansicht eines Hauptfiltereinsatzes;
- Figur 12: eine perspektivische Rückansicht des Hauptfiltereinsatzes der Figur 11;
- Figur 13: eine perspektivische Schnittansicht des Hauptfiltereinsatzes der Figur 11;
- Figur 14: eine perspektivische Rückansicht des Hauptfiltereinsatzes der Figur 11 ohne Kantenschutz;
- Fig. 15, 16: perspektivische Außenansicht des Filters der Figur 5 mit unterschiedlichen Stellungen des Abströmstutzens;
- Figur 17: eine Seitenansicht des Filters der Figur 5;
- Figur 18: eine Seitenansicht des Filters der Figur 15; und
- Figur 19: eine Seitenansicht des Filters der Figur 16.

### Ausführungsform(en) der Erfindung

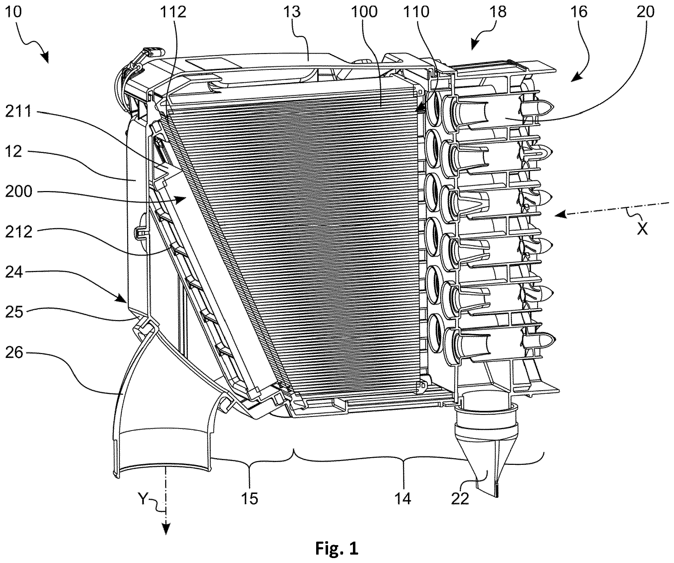

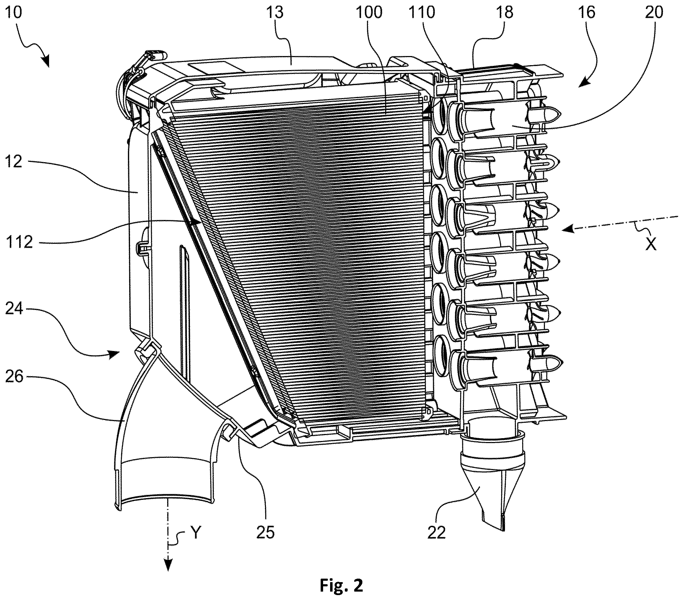

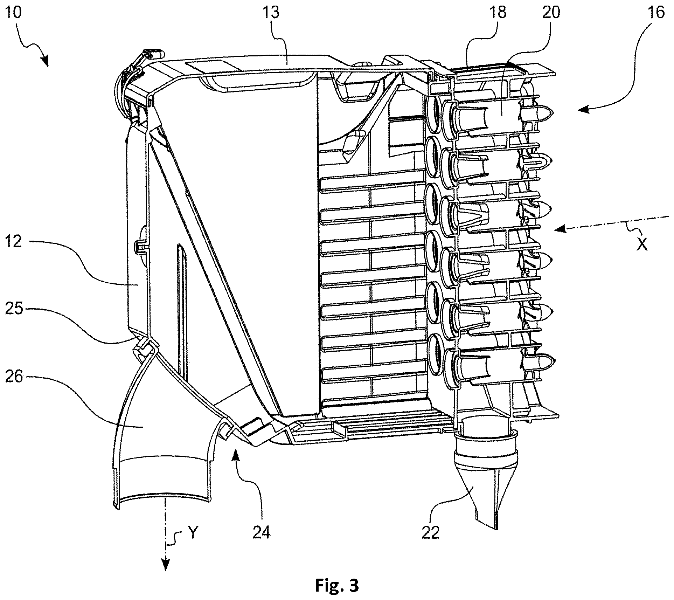

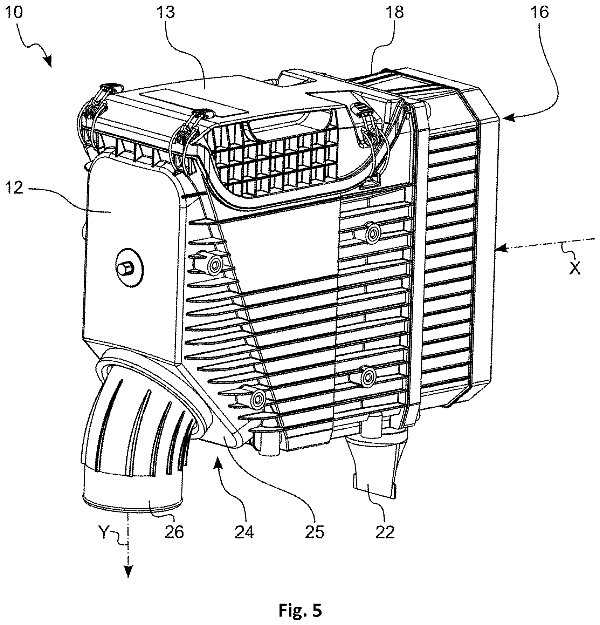

Es wird nun unter Bezugnahme auf die Figuren 1 bis 5 eine Ausführungsform eines erfindungsgemäßen Filters 10 beschrieben. Ein solcher Filter 10 kann beispielsweise in einem Luftansaugtrakt einer Bau- oder Landmaschine, eines Kompressors oder sonstigen Geräts mit einer Brennkraftmaschine zur Filterung eines Fluids, insbesondere von Luft, eingesetzt werden. Der Filter 10 weist ein Filtergehäuse 12 auf, das sich grob in einen rohseitigen Bereich 14 und einen reinseitigen Bereich 16 aufgliedern lässt.

Der Filter 100 wird entlang einer Hauptanströmrichtung X durchströmt. Auf einer Anströmseite 16 trifft das zu filternde Fluid auf ein Grob- oder Vorabscheidermodul 18, das vorliegend als Zyklonblock ausgebildet ist. In dem Zyklonblock 18 sind eine Vielzahl einzelner Vorabscheiderzellen 20 in einem sog. Multi-Zyklonblock parallel geschaltet. In dem Zyklonblock 18 wird vorabgeschiedener Staub und/oder Wasser durch einen Austragsstutzen 22 aus dem Filtergehäuse 12 entfernt.

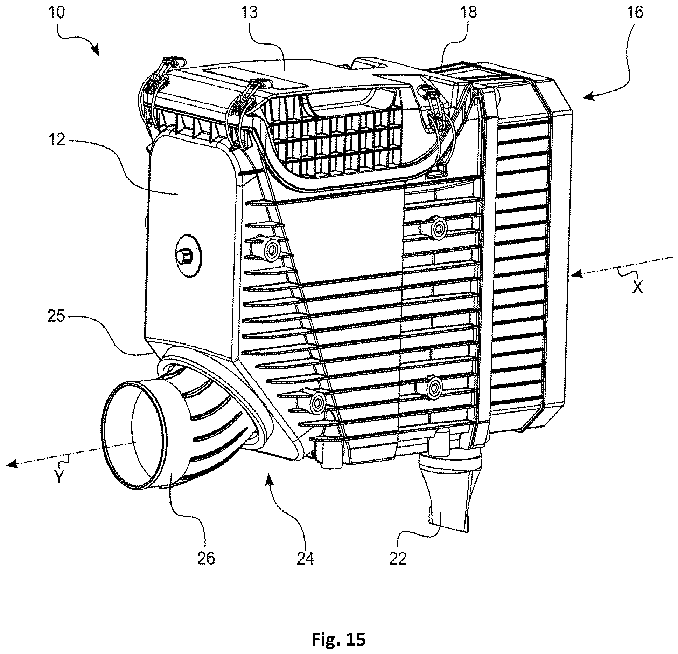

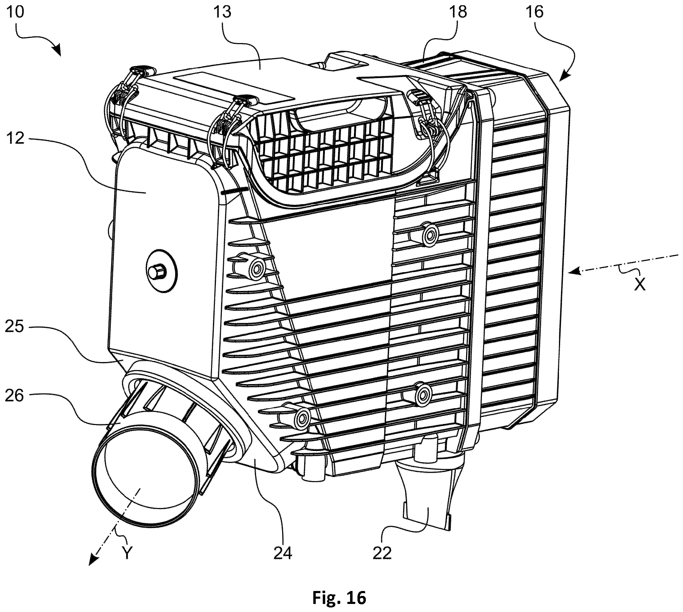

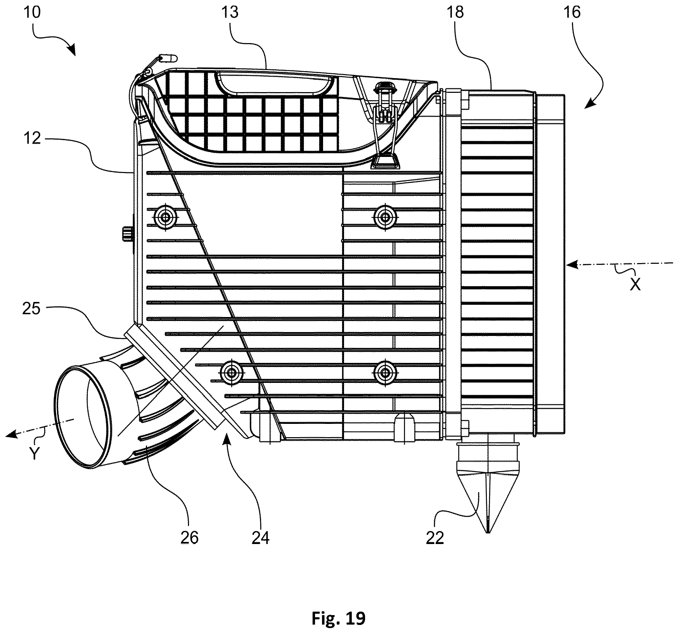

Nach dem Zyklonblock 18 gelangt das zu filternde Fluid in den Hauptfiltereinsatz 100. Der Hauptfiltereinsatz 100 ist vorliegend prismatisch ausgebildet. Eine Anströmfläche 110 des Hauptfiltereinsatzes 100 liegt nicht parallel zu einer Abströmfläche 112 des Hauptfiltereinsatzes 100. Vielmehr schließen die Anströmfläche 110 und die Abströmfläche 112 einen Winkel ein. Vorliegend ist die Anströmfläche 110 des Hauptfiltereinsatzes 100 hinsichtlich ihrer angestrebten Fläche kleiner als die Abströmfläche 112 des Hauptfiltereinsatzes 100. Abströmseitig des Hauptfiltereinsatzes 100 ist in dem Filtergehäuse 12 ein Sekundärfiltereinsatz 200 vorgesehen. Eine Hauptanströmfläche 210 des Sekundärfilterelements 200 ist auf die Abströmfläche 112 des Hauptfiltereinsatzes 100 ausgerichtet und insbesondere parallel zu dieser angeordnet. Eine Abströmfläche 212 ist in dieser Ausführungsform parallel zu der Hauptanströmfläche 210 des Sekundärfiltereinsatzes 200 ausgerichtet. Aufgrund der Neigung der Abströmfläche 112 des Hauptfiltereinsatzes 100 findet bereits bei der Anströmung des Fluids aus dem Hauptfiltereinsatz 100, aber auch bei der Anströmung aus dem Sekundärfiltereinsatz 200 eine Ablenkung der Hauptströmungsrichtung X statt. Durch die Abströmungsgeometrie des Filtergehäuses 12 im Abströmbereich 24 wird das strömende Fluid auf die Abströmungsrichtung Y um- und zu einem Abströmstutzen 26 gelenkt. Vorliegend ist die Hauptabströmungsrichtung Y im Wesentlichen senkrecht zur Hauptanströmungsrichtung X. Es sind aber auch andere Abströmungsrichtungen denkbar. Dies wird insbesondere im Zusammenhang mit den Figuren 15-19 näher erläutert.

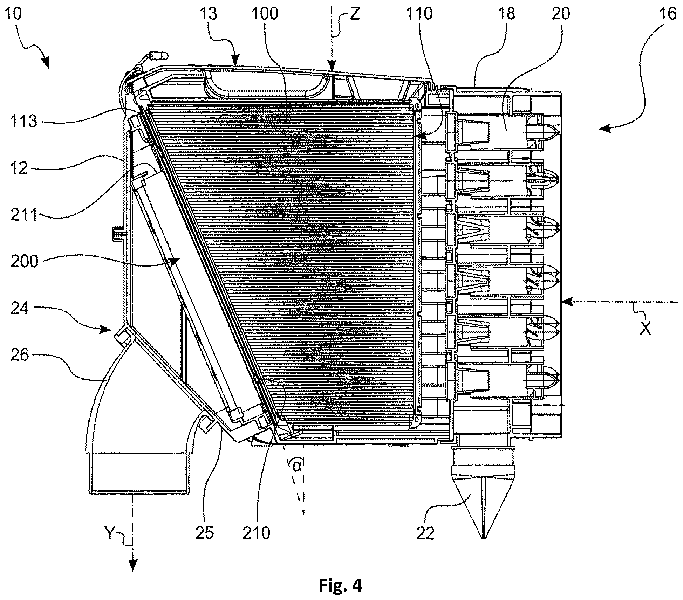

Der Hauptfiltereinsatz 100 weist eine Hauptfiltereinsatz-Anströmfläche 110, eine Hauptfiltereinsatz-Strömungsrichtung X1, eine Hauptfiltereinsatz-Abströmfläche 112 sowie eine auf einer Dichtfläche 114 angeordnete Dichtung 116 zur fluiddichten Trennung des rohseitigen Bereichs 14 und des reinseitigen Bereichs 16 des Filtergehäuses 12 auf. Stromabwärts des Hauptfiltereinsatzes 100 ist ein Sekundärfiltereinsatz 200 mit einer Sekundärfiltereinsatz-Anströmfläche 210, einer Sekundärfiltereinsatz-Strömungsrichtung Y1 und einer Sekundärfiltereinsatz-Abströmfläche 212 angeordnet. Die Dichtfläche 114 des Hauptfiltereinsatzes 100 ist schräg zur Hauptströmungsrichtung Y1 des Hauptfiltereinsatzes 100 angeordnet. Insbesondere ist die Dichtfläche 114 unter einem Winkel α angeordnet, der bevorzugt zwischen 5° und 45° beträgt (siehe Figur 4), Insbesondere beträgt der Winkel 24°±10° und 24°±5°. In der vorliegenden Ausführungsform beträgt der Winkel α 24° (siehe Figur 4).

Die Sekundärfiltereinsatz-Anströmfläche 210 verläuft im Wesentlichen parallel und beabstandet zu der Dichtfläche 114 des Hauptfiltereinsatzes 100. Der Abstand beträgt weniger als 2 cm, in der vorliegenden Ausführungsform beträgt der Abstand 1 cm.

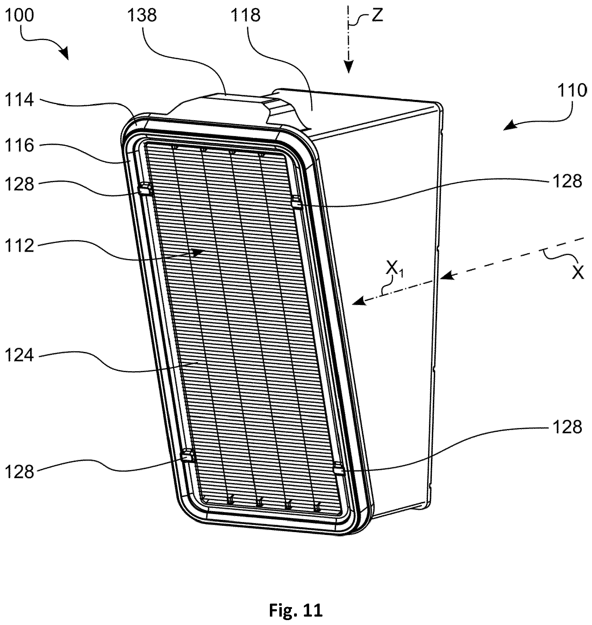

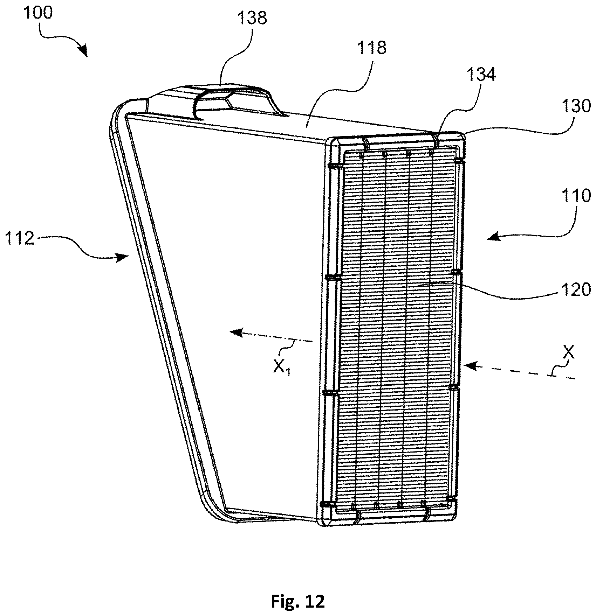

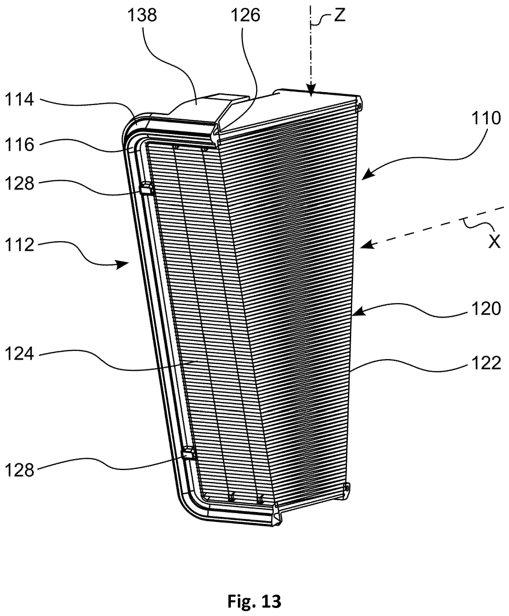

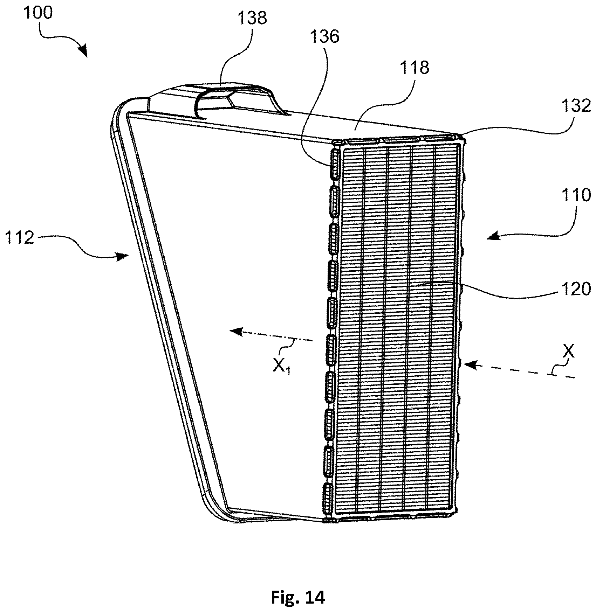

Die Figuren 11-14 zeigen den Hauptfiltereinsatz 100. Der Hauptfiltereinsatz 100 weist eine Anströmfläche 110 und eine Abströmfläche 112 auf. Der Hauptfiltereinsatz 100 wird entlang einer Hauptanströmungsrichtung X angeströmt und entlang einer Hauptdurchströmungsrichtung X1 durchströmt. Der Hauptfiltereinsatz 100 weist einen Filtereinsatzrahmen 118 auf, der einen Filterkörper 120 aufnimmt. Der Filterkörper 120 ist vorliegend als Faltenbalg ausgebildet. Anströmseitige Faltkanten 122 liegen gegenüber abströmseitigen Faltkanten 124. Anströmseitige Faltkanten 122 und abströmseitige Faltkanten 124 liegen parallel, im Wesentlichen senkrecht zur Hauptdurchströmungsrichtung X1 und in den Figuren 11-14 im Wesentlichen waagerecht. Diese Orientierung der Faltkanten 122, 124 erlaubt eine Variation der Faltentiefe in Richtung einer Einführrichtung Z. Entlang der Einführrichtung Z ist der Hauptfiltereinsatz 100 in das Filtergehäuse 12 des Filters 10 einführbar. In dem vorliegenden Ausführungsbeispiel verringert sich die Faltenhöhe entlang der Einführrichtung Z. Dies bewirkt eine Verkippung der Anströmfläche 110 gegenüber der Abströmfläche 112.

Im Bereich der Abströmfläche 110 weist der Filterrahmen 118 eine Dichtfläche 114 auf, entlang der eine umlaufende Dichtung 116 vorgesehen ist. Die Dichtung dient zur Trennung des rohseitigen Bereichs 14 von dem reinseitigen Bereich 16 in dem Filtergehäuse 12 des Filters 10, wenn der Hauptfiltereinsatz 100 in den Filter 10 eingesetzt ist. Die Dichtung 112 weist im Wesentlichen im Querschnitt eine U-Form auf.

Zur Verstärkung und besseren mechanischen Anbindung der Dichtung 116 an den Filterrahmen 118 ist ein Steg 126 vorgesehen, der in die U-Form der Dichtung 116 eingreift. Gleichzeitig kann die Dichtung 116 den Filterkörper 120 kontaktieren oder durchdringen, so dass gleichzeitig eine Verklebung des Filterkörpers 120 mit dem Filtereinsatzrahmen 118 und eine fluiddichte Abdichtung zwischen Filterkörper 120 und Filtereinsatzrahmen 118 entsteht.

Des Weiteren weist die Dichtung 116 eine vorliegend als Abstütznoppen 128 ausgebildete Abstandsstruktur auf. Die Abstütznoppen 128 sind Bestandteil des Dichtungsmaterials der Dichtung 116. Wie aus der Querschnittsansicht der Figur 4 erkennbar ist, kontaktieren die Abstütznoppen 128 den Sekundärfiltereinsatz 200, insbesondere einen Sekundärfiltereinsatzrahmen, wenn Hauptfiltereinsatz 100 und Sekundärfiltereinsatz 200 in dem Filtergehäuse 12 des Filters 10 eingesetzt sind. In diesem Zustand kann sich der Sekundärfiltereinsatz 200 auch bei einer Vibrationsanregung, die beispielsweise durch das Filtergehäuse 12 übertragen werden kann, nicht aus einem Dichtsitz im Filtergehäuse 12 bewegen. Außerdem wird durch die Abstütznoppen 128 sichergestellt, dass der Sekundärfiltereinsatz 200 nach dem Einbau des Hauptfiltereinsatzes 100 und dem Verschließen des Deckels 13 an der richtigen Position im Filtergehäuse 12 sitzt.

Die Abstütznoppen 128 sind mehrfach entlang der Dichtung 116 an der Abströmfläche 112 zugewandten Seite angeordnet. Sie können beispielsweise integral mit der Dichtung 116 bei der Herstellung der Dichtung 116 hergestellt werden.

Die Dichtung 116 befindet sich an der Abströmfläche 112 des Hauptfiltereinsatzes 100 und wirkt in eine Richtung, die senkrecht zur Abströmfläche 112 liegt, also im Wesentlichen axial entlang der Hauptdurchströmungsrichtung X1.

Der Hauptfiltereinsatz 100 weist an seiner Anströmseite 110 einen außen um den Filterrahmen 118 umlaufenden Kantenschutz 130 auf. Der Kantenschutz 130 ist so ausgelegt, dass bei einem Ausklopfen des Hauptfiltereinsatzes 100, beispielsweise zum Abreinigen, Schläge gegen den Filterrahmen 118 aufgenommen und zumindest teilweise abgefedert werden können. So kann ein Brechen des Filterrahmens 118 oder eine anderweitige Beschädigung des Filtereinsatzes 100, beispielsweise des Filterkörpers 120, vermieden werden. Der Kantenschutz 130 läuft um die anströmseitige Kante des Filterelements 118 herum. Dabei können einzelne Unterbrechungen, wie beispielsweise die Einkerbungen 134 vorgesehen sein. Die Einkerbungen 134 entstehen bei der Herstellung des Kantenschutzes 130. Dabei liegt der Filterrahmen 118 samt Filterkörper 120 in einer Gussschale. Stege halten dabei einen Abstand zwischen dem Gussschalenboden und dem Filterkörper 118 und lassen dabei die Einkerbungen 134 während des Gussvorgangs entstehen.

An der anströmseitigen Kante 132 sind Ausnehmungen 136 vorgesehen. Die Ausnehmungen 136 durchbrechen die Seitenwände des Filterrahmens 118 und erstrecken sich somit senkrecht zur Hauptdurchströmungsrichtung X1. Während des bereits erwähnten Gussvorgangs durchdringt das Gussmaterial für den Kantenschutz 130 die Ausnehmungen 136, kontaktiert die Innenwände des Filtereinsatzrahmens 118 und insbesondere den Filterkörper 120. Es entsteht damit eine fluiddichte Abdichtung zwischen dem Filterkörper 120 und dem Filtereinsatzrahmen 118 und gleichzeitig eine Verklebung der beiden Bauteile. Es ist somit der Kantenschutz 130 einteilig mit der Verklebung zwischen Filterkörper 120 und Filtereinsatzrahmen 118 und einer ebenfalls notwendigen Abdichtung zwischen den beiden Bauteilen hergestellt. Der Kantenschutz 130 kann beispielsweise aus einem schäumbaren Polyurethan hergestellt sein. Es sind aber auch silikonbasierte Materialsysteme denkbar.

Der Filtereinsatz 100 weist einen Griff 138 auf. Der Griff 138 wirkt mit dem Deckel 13 des Filters 10 zusammen und sorgt für einen sicheren Sitz des Hauptfiltereinsatzes 100 in dem Filtergehäuse 12 und übt gleichzeitig einen axial in Richtung der Hauptströmungsrichtung X1 gerichteten Druck auf die Dichtung 116 aus und sorgt somit für einen festen Dichtsitz des Hauptfiltereinsatzes 100 in dem Filtergehäuse 12.

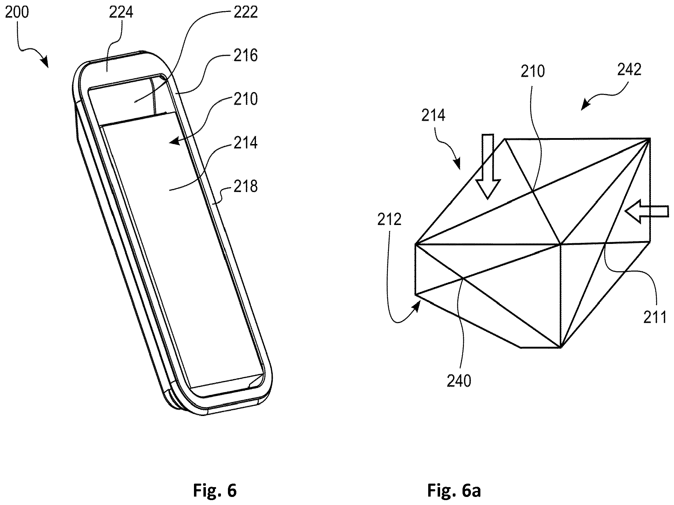

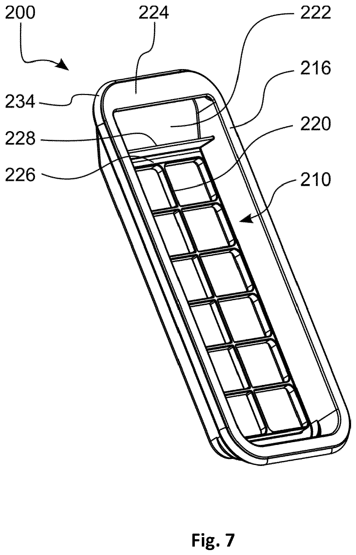

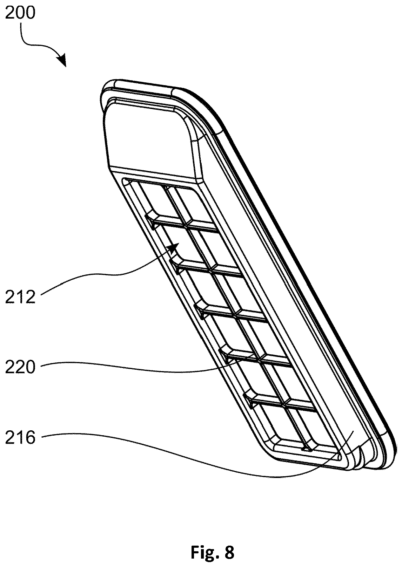

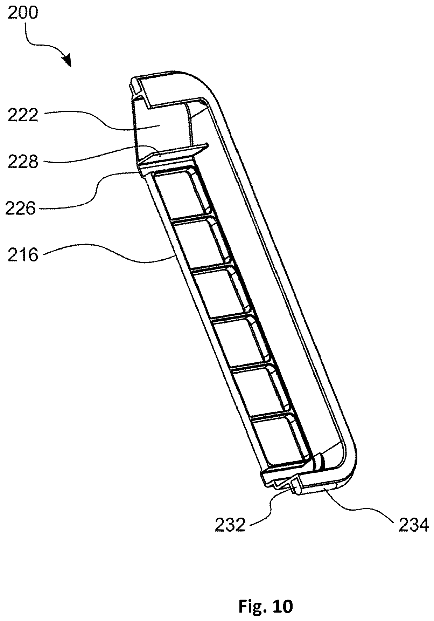

Die Figuren 6-10 zeigen eine Ausführungsform eines Sekundärfiltereinsatzes 200. Der Sekundärfiltereinsatz 200 weist eine Hauptanströmfläche 210, eine Abströmfläche 212 sowie eine Hauptdurchströmungsrichtung Y1 auf. Ferner weist der Sekundärfiltereinsatz 200 einen Filterkörper 214 auf, der von einem Filtereinsatzrahmen 216 getragen wird. Anströmseitig schließt der Filtereinsatzrahmen 216 mit einem um den Filterkörper 214 umlaufenden Rahmenbereich 218 im Wesentlichen bündig mit dem Filterkörper 214 ab.

Der Rahmenbereich 218 kann beispielsweise als Widerlager für die Abstütznoppen 128 des Hauptfiltereinsatzes 100 im eingesetzten Zustand beider Filtereinsätze 100, 200 dienen.

In der vorliegenden Ausführungsform ist der Filterkörper 214 im Wesentlichen quaderförmig. Es sind aber auch andere Grundformen wie etwa ein Prisma denkbar. Abströmseitig, also im Bereich der Abströmfläche 212, ist der Filtereinsatzrahmen 216 mit einer Gitterstruktur 220 versehen. Die Gitterstruktur 220 überdeckt die Abströmfläche 212 zumindest teilweise. Bei einem hohen Differenzdruck zwischen der Anströmseite 210 und der Abströmseite 212 verhindert die Gitterstruktur 220 ein unerwünschtes Durchbiegen oder gar Durchfallen des Filterkörpers 214.

An einer Schmalseite des quaderförmigen Filterkörpers 214 ist der Filtereinsatzrahmen 216 mit einer Griffmulde 222 versehen. Um ein bequemes Greifen in der Griffmulde 222 für die Hand einer Person zu ermöglichen, die den Sekundärfiltereinsatz 200 wechseln möchte, ist der Rahmenbereich 218 im Bereich der Griffmulde 222 zu einem Griffsteg 224 verbreitert. Die Breite des Griffstegs 224 ist dabei so gewählt, dass ein direktes Anströmen eines die Hauptfiltereinsatz-Abströmfläche 112 verlassendes Fluid zu dem Filterkörper 214 insbesondere an der der Griffmulde 222 zugewandten Seite möglich ist. Dies ist insbesondere auch aus der Querschnittsansicht der Figur 4 gut erkennbar. Auch von der obersten Kante 113 der Hauptfilterelement-Abströmfläche 112 kann ein austretendes Fluids direkt zu dem Filterkörper 214 des Sekundärfiltereinsatzes 200 strömen. Dabei kann das Fluid insbesondere über die Nebenanströmfläche 211 in den Filterkörper 214 eintreten.

In diesem Ausführungsbeispiel ist der Filterkörper 214 als Filterbalg ausgebildet. Die Faltkanten verlaufen dabei parallel zu der Längsachse des Sekundärfiltereinsatzes 200, so dass die Stirnseiten der Falten die Nebenanströmfläche 211 bilden. Die Faltkanten der Falten bilden die Hauptanströmfläche 210 und die Abströmfläche 212. Durch die Kombination aus Griffmulde 222 und über die Nebenanströmfläche 211 seitlich anströmbarem Filterbalg 214 können die Druckverluste an dem Sekundärfiltereinsatz 200 verringert werden, da der Sekundärfiltereinsatz 200 deutlich besser an die Strömungsführung von dem Hauptfiltereinsatz 100 zu dem Abströmstutzen in dem Filtergehäuse 12 angepasst ist. Gleichzeitig erhöht die Gitterstruktur 220 an der Abströmseite 212 die Kollapsfestigkeit des Sekundärfiltereinsatzes 200. Ferner ist über den integrierten Griff an der Griffmulde 222 eine leichte Demontage des Filtereinsatzes 200 möglich.

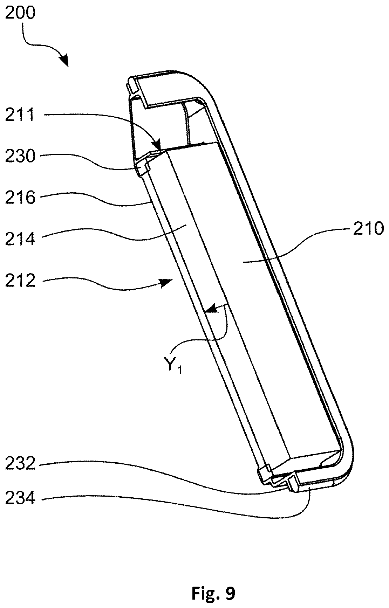

Der Sekundärfiltereinsatz 200 weist einen Filterrahmen 216 auf, der umlaufend um den abströmseitigen Rand des Filterkörpers 214 eine Nut 226 vorsieht. Gleichzeitig ist an der der Griffmulde 222 zugewandten Seite des Filtereinsatzrahmens 216 ein Steg 228 vorgesehen. Die Nut 226 dient als Gussform für eine umlaufende Verklebung und Abdichtung des Filterkörpers 214 mit dem Filtereinsatzrahmen 216. Die Abdichtung und Verklebung wird durch ein Dichtungsmaterial 230 (siehe Figur 9) bewirkt. Das Dichtungsmaterial 230 kann beispielsweise ein schäumendes Polyurethan sein. Es sind aber auch silikonbasierte Materialsysteme denkbar.

Die Nut 226 und zusätzlich der Steg 228 sorgen für eine gute mechanische Ankopplung des Dichtungsmaterials 230 an den Filtereinsatzrahmen 216. Diese Ausgestaltung hat zudem den Vorteil, dass nach dem Einbringen des Dichtungsmaterials 230 in die Nut 226 und dem Einlegen des Filterkörpers 214 in den Filtereinsatzrahmen 216 und einem nachfolgenden Aufschäumen und Aushärten keine weiteren Bearbeitungsschritte wie etwa ein Beschneiden des Dichtungsmaterials 230 notwendig sind. Überschüssiges Material kann teilweise von Filterkörper 214 aufgenommen werden oder in den Zwischenbereich zwischen Filterkörper 214 und Filtereinsatzrahmen 216 gelangen, ohne dass dies nachteilig wäre.

Die Tiefe der Nut 226 verläuft im Wesentlichen entlang der Hauptdurchströmungsrichtung Y1 des Sekundärfiltereinsatzes 200. Die abströmseitige Gitterstruktur 222 kann einteilig mit dem Filtereinsatzrahmen 216 ausgebildet sein.

An seinem anströmseitigen Umfang weist der Filtereinsatzrahmen 216 eine Dichtungsaufnahmenut 232 auf. In diese Dichtungsaufnahmenut 232 kann eine beispielsweise aus einem Moosgummi hergestellte Dichtung 234 eingelegt werden. Die Dichtung 234 wirkt somit radial, d.h. senkrecht zur Hauptdurchströmungsrichtung Y1 des Sekundärfiltereinsatzes 200.

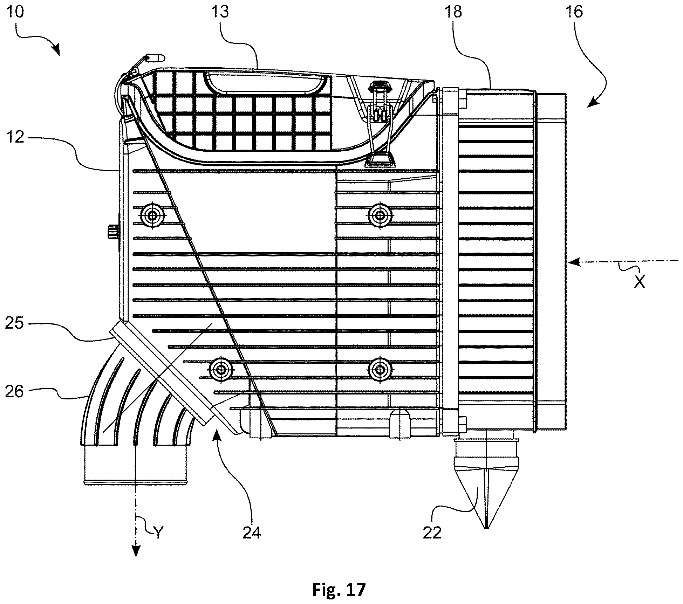

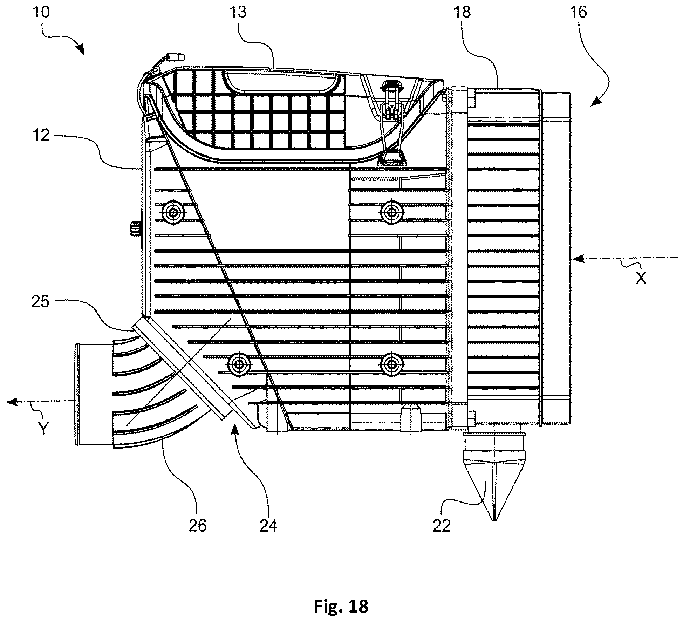

Die Figuren 15-19 zeigen den Filter 10 mit verschiedenen Orientierungen der des Abströmstutzens 26. Das Filtergehäuse 12 des Filters 10 weist im Abströmbereich 24 einen Befestigungsbereich 25 auf. Der Befestigungsbereich 25 schließt mit der Hauptanströmrichtung X des Filtergehäuses 12 einen Winkel von ungefähr 45° ein. An den Befestigungsbereich 25 ist der Abströmstutzen 26 befestigbar. Der Abströmstutzen 26 ist so geformt, dass ein durch den Abströmstutzen 26 strömendes Fluid eine. Umlenkung von 45° erfährt. Der Abströmstutzen 46 ist vor einem endgültigen Befestigen an der Befestigungsfläche 25 drehbar ansetzbar. Es kann somit erst zu einem sehr späten Zeitpunkt bei der Herstellung des Filters 10 die endgültige Umlenkungsrichtung bzw. Abströmrichtung Y des Filters 10 festgelegt werden. Bei der in dieser Ausführungsform gezeigten Geometrie sind eine Inline-Durchströmung (Figuren 15, 18), eine Umlenkung um 90° (Figur 17) sowie dazwischenliegende Winkelbereiche möglich. Bei den zwischen den extremen Winkeln liegenden Winkelbereichen erfolgt zusätzlich eine seitliche Ablenkung.

## Patentansprüche

1. Filtereinsatz (200), insbesondere Sekundärfiltereinsatz, für einen Filter (10) zur Filterung von Luft, insbesondere für eine Brennkraftmaschine, mit einer Hauptanströmfläche (210), einer Abströmfläche (212) und einer Hauptströmungsrichtung (Y1), einem als zickzackförmig gefalteter Filterbalg ausgebildeten Filterkörper (214), der entlang der Hauptströmungsrichtung (Y1) durchströmbar ist, einem den Filterkörper (214) tragenden Filtereinsatzrahmen (216), wobei der Filtereinsatzrahmen (216) eine Dichtung (234) zur Trennung eines Filterinnenraums eines Filters (10) in Reinseite und Rohseite und anströmseitig einen Griffbereich (222) aufweist, wobei der Griffbereich (222) so ausgelegt ist, dass ein Anströmen des Filterkörpers (214) über den Griffbereich (222) und eine manuelle Entnahme des Filtereinsatzes (200) möglich ist, wobei die Hauptanströmfläche (210) durch Faltkanten gebildet wird und seitlich zu der Hauptanströmfläche (210) eine Nebenanströmfläche (211) vorgesehen ist, wobei eine Stirnseite des Filterbalgs als Nebenanströmfläche (211) dient und in Richtung des Griffbereichs zeigt, wobei der Griffbereich (222) der zu dieser Stirnseite offen ist als Griffmulde (222) ausgebildet ist, die Griffmulde (222) zu dem Filterkörper (214) zeigt und wobei der Griffbereich (222) ein Anströmen des Filterkörpers (214) seitlich neben der Hauptanströmfläche (210) ermöglicht.

2. Filtereinsatz nach Anspruch 1, wobei in Hauptströmungsrichtung (Y1) der Griffbereich (222) im Wesentlichen nicht über die Hauptanströmfläche (210) hinaus ragt.

3. Filtereinsatz nach einem der vorherigen Ansprüche, wobei der Filterkörper (214) im Wesentlichen quaderförmig ist.

4. Filtereinsatz nach einem der vorherigen Ansprüche, wobei der Filtereinsatzrahmen (216) abströmseitig ein die Abströmfläche (212) überdeckendes Gitter (220) aufweist.

5. Filtereinsatz nach dem vorhergehenden Anspruch, wobei das Gitter (220) einteilig mit dem Filtereinsatzrahmen (216) ausgebildet ist.

6. Filtereinsatz nach einem der vorherigen Ansprüche, welcher eine Verklebung (230) zwischen dem Filterkörper (214) und dem Filtereinsatzrahmen (216) aufweist.

7. Filtereinsatz nach dem vorhergehenden Anspruch, wobei die Dichtung (234) radial zur Hauptströmungsrichtung (Y1) wirkend ausgelegt und insbesondere im Wesentlichen senkrecht zur Hauptströmungsrichtung (Y1) um den Filtereinsatz (200) umläuft.

8. Filtereinsatz nach einem der vorherigen Ansprüche, wobei ein Trägerabschnitt (226) des Filtereinsatzrahmens (216) um den Filterkörper (214) umläuft und der Trägerabschnitt an der Innenseite eine Innenkante, insbesondere eine Nut (226), zur Aufnahme eines Klebematerials (230) der Verklebung aufweist.

9. Filtereinsatz nach dem vorhergehenden Anspruch, wobei die Tiefe der Nut (226) in Richtung der Hauptströmungsrichtung (Y1) verläuft.

10. Filtereinsatz nach einem der vorherigen Ansprüche, wobei ein Dichtungsaufnahmeabschnitt (232) des Filtereinsatzrahmens (216) außen um den Filterkörper (214) umläuft.

11. Filtereinsatz nach einem der vorherigen Ansprüche, wobei die Verklebung (230) ein Polyurethan aufweist und insbesondere geschäumt ist.

12. Filter (10), insbesondere für Brennkraftmaschinen, zur Filterung von Luft, mit einem Filtergehäuse (12), das einen rohseitigen Bereich (14) und einen reinseitigen Bereich (15) aufweist, einem in das Filtergehäuse (12) einsetzbaren Hauptfiltereinsatz (100) mit einer Hauptfiltereinsatz-Anströmfläche (110), einer zur Hauptfiltereinsatz-Anströmfläche (110) senkrechten Hauptfiltereinsatz-Strömungsrichtung (X1), einer Hauptfiltereinsatz-Abströmfläche (112) sowie einer auf einer Dichtfläche (114) angeordneten Dichtung (116) zur fluiddichten Trennung des rohseitigen Bereichs (14) und des reinseitigen Bereichs (15) des Filtergehäuses (12), sowie einem stromabwärts des Hauptfiltereinsatzes (100) angeordneten Sekundärfiltereinsatz (200) nach einem der vorherigen Ansprüche, mit einer Sekundärfiltereinsatz-Anströmfläche (210), einer Sekundärfiltereinsatz-Strömungsrichtung (Y1) und einer Sekundärfiltereinsatz-Abströmfläche (212), wobei die Dichtfläche (114) schräg zur Hauptfiltereinsatz-Strömungsrichtung (X1) des Hauptfiltereinsatzes (100) angeordnet ist, wobei die Dichtfläche (114) und die Hauptströmungsrichtung (X1) einen Winkel einschließen, der zwischen 80° und 10° liegt.

13. Filter nach Anspruch 12, wobei die Dichtfläche (114) und die Hauptfiltereinsatz-Abströmfläche (112) parallel verlaufen und insbesondere in einer Ebene liegen.

14. Filter nach einem der vorherigen Ansprüche 12 bis 13, wobei die Sekundärfiltereinsatz-Anströmfläche (210) parallel und beabstandet zu der Dichtfläche (114) verläuft, wobei insbesondere der Abstand weniger als 2 cm und insbesondere 1 cm beträgt.

15. Filter nach einem der vorherigen Ansprüche 12 bis 14, wobei das Filtergehäuse (12) eine Anströmrichtung (X), eine Abströmrichtung (Y) sowie einen Abströmbereich (24) mit einer Abströmöffnung aufweist und an den Abströmbereich (24) ein Abströmstutzen (26) befestigbar ist, wobei der Abströmbereich (24) eine Befestigungsfläche (25) für den Abströmstutzen (26) aufweist und die Befestigungsfläche (25) mit der Hauptfiltereinsatz-Strömungsrichtung (X1) einen Winkel von 45° einschließt.

## Claims

1. Filter insert (200), in particular secondary filter insert, for a filter (10) for filtering air, in particular for an internal combustion engine, with a main inflow surface (210), an outflow surface (212) and a main flow direction (Y1), a filter body (214) designed as a zigzag-shaped folded filter bellows and which can be flowed through along the main flow direction (Y1), a filter insert frame (216) carrying the filter body (214), wherein the filter insert frame (216) features a seal (234) for separating a filter interior of a filter (10) into clean side and raw side and a grip area (222) on the inflow side, wherein the grip area (222) is designed in such a way that a flow against the filter body (214) over the grip area (222) and a manual removal of the filter insert (200) are possible, wherein the main inflow surface (210) is formed by fold edges and a secondary inflow surface (211) is provided laterally to the main inflow surface (210), wherein one front side of the filter bellows serves as a secondary inflow surface (211) and points in the direction of the grip area, wherein the grip area (222), which is open towards this front side, is designed as a recessed grip (222), the recessed grip (222) pointing towards the filter body (214) and wherein the grip area (222) allows a flow against the filter body (214) laterally next to the main inflow surface (210).

2. Filter insert according to claim 1, wherein the grip area (222) does not substantially project beyond the main inflow surface (210) in the main flow direction (Y1).

3. Filter insert according to one of the preceding claims, wherein the filter body (214) is substantially cuboid-shaped.

4. Filter insert according to one of the preceding claims, wherein the filter insert frame (216) features a grating (220) on the outflow side covering the outflow surface (212).

5. Filter insert according to the preceding claim, wherein the grating (220) is formed integrally with the filter insert frame (216).

6. Filter insert according to one of the preceding claims, which features an adhesion (230) between the filter body (214) and the filter insert frame (216).

7. Filter insert according to the preceding claim, wherein the seal (234) is designed to act radially to the main flow direction (Y1) and in particular surrounds the filter insert (200) substantially perpendicular to the main flow direction (Y1).

8. Filter insert according to one of the preceding claims, wherein a support portion (226) of the filter insert frame (216) surrounds the filter body (214) and the support portion features an inner edge, in particular a groove (226), on the interior side for receiving an adhesive material (230) of the adhesion.

9. Filter insert according to the preceding claim, wherein the depth of the groove (226) extends in the direction of the main flow direction (Y1).

10. Filter insert according to one of the preceding claims, wherein a seal receiving section (232) of the filter insert frame (216) externally surrounds the filter body (214).

11. Filter insert according to one of the preceding claims, wherein the adhesion (230) features a polyurethane and is in particular foamed.

12. Filter (10), in particular for internal combustion engines, for filtering air, with a filter housing (12) which features a region (14) on the raw side and a region (15) on the clean side, a main filter insert (100) which can be inserted into the filter housing (12) with an inflow surface of the main filter insert (110), a flow direction of the main filter insert (X1) perpendicular to the inflow surface of the main filter insert (110), an outflow surface of the main filter insert (112) and a seal (116) disposed on a sealing surface (114) for fluid-tight separation of the region (14) on the raw side and the region (15) of the clean side of the filter housing (12), as well as a secondary filter insert (200) disposed downstream of the main filter insert (100) according to one of the preceding claims, with an inflow surface of the secondary filter insert (210), a flow direction of the secondary filter insert (Y1) and an outflow surface of the secondary filter insert (212), wherein the sealing surface (114) is disposed obliquely to the flow direction of the main filter insert (X1) of the main filter insert (100), wherein the sealing surface (114) and the main flow direction (X1) enclose an angle which is between 80° and 10°.

13. Filter according to claim 12, wherein the sealing surface (114) and the outflow surface of the main filter insert (112) extend parallel and in particular lie in one plane.

14. Filter according to one of the preceding claims 12 to 13, wherein the inflow surface of the secondary filter insert (210) extends parallel to and at a distance from the sealing surface (114), wherein in particular the distance is less than 2 cm and in particular 1 cm.

15. Filter according to one of the preceding claims 12 to 14, wherein the filter housing (12) features an inflow direction (X), an outflow direction (Y) and an outflow section (24) with an outflow opening and an outflow connection piece (26) can be attached to the outflow section (24), wherein the outflow section (24) features an attachment surface (25) for the outflow connection piece (26) and the attachment surface (25) forms an angle of 45° with the flow direction of the main filter insert (X1).

## Revendications

1. Cartouche filtrante (200), notamment cartouche filtrante secondaire, pour un filtre (10) destiné à filtrer de l'air, notamment pour un moteur à combustion interne, avec une surface d'afflux principale (210), une surface d'écoulement (212) et un sens de flux principal (Y1), un corps de filtre (214) exécuté en tant que soufflet de filtre plié en accordéon et pouvant être parcouru le long du sens de flux principal (Y1), un cadre de la cartouche filtrante (216) supportant le corps de filtre (214), le cadre de la cartouche filtrante (216) présentant un joint (234) servant à diviser un espace intérieur d'un filtre (10) en un côté pur et un côté brut et doté du côté de l'afflux d'une zone de préhension (222), la zone de préhension (222) étant conçue de telle manière qu'un afflux du corps de filtre (214) au-dessus de la zone de préhension (222) et un retrait manuel de la cartouche filtrante (200) soient possibles, la surface d'afflux principale (210) étant formée par des arêtes de pliage et une surface d'afflux secondaire (211) étant prévue latéralement par rapport à la surface d'afflux principale (210), une face frontale du soufflet de filtre servant de surface d'afflux secondaire (211) et étant dirigée vers la zone de préhension, la zone de préhension (222) ouverte vers cette face frontale étant exécutée en tant que poignée en creux (222), la poignée en creux (222) étant dirigée vers le corps de filtre (214) et la zone de préhension (222) autorisant un afflux du corps de filtre (214) latéralement à côté de la surface d'afflux principale (210).

2. Cartouche filtrante selon la revendication 1, la zone de préhension (222) ne dépassant pas essentiellement de la surface d'afflux principale (210) dans le sens de flux principal (Y1).

3. Cartouche filtrante selon l'une des revendications précédentes, le corps de filtre (214) ayant essentiellement une forme parallélépipédique.

4. Cartouche filtrante selon l'une des revendications précédentes, le cadre de la cartouche filtrante (216) présentant du côté de l'écoulement une grille (220) qui recouvre la surface d'écoulement (212).

5. Cartouche filtrante selon la revendication précédente, la grille (220) étant réalisée en une seule pièce avec le cadre de la cartouche filtrante (216).

6. Cartouche filtrante selon l'une des revendications précédentes, la cartouche présentant une partie collée (230) entre le corps de filtre (214) et le cadre de la cartouche filtrante (216).

7. Cartouche filtrante selon la revendication précédente, le joint (234) ayant un effet radial par rapport au sens de flux principal (Y1) et entourant la cartouche filtrante (200) notamment essentiellement de manière verticale par rapport au sens de flux principal (Y1).

8. Cartouche filtrante selon l'une des revendications précédentes, un segment de support (226) du cadre de la cartouche filtrante (216) entourant le corps de filtre (214) et le segment de support présentant sur sa face intérieure un bord intérieur, notamment une rainure (226) servant à réceptionner un matériau adhésif (230) de la partie collée.

9. Cartouche filtrante selon la revendication précédente, la profondeur de la rainure (226) évoluant en direction du sens de flux principal (Y1).

10. Cartouche filtrante selon l'une des revendications précédentes, une section de réception de joint (232) du cadre de la cartouche filtrante (216) entourant le corps de filtre (214) à l'extérieur.

11. Cartouche filtrante selon l'une des revendications précédentes, la partie collée (230) présentant un polyuréthane et étant notamment moulée par expansion.

12. Filtre (10), notamment pour des moteurs à combustion interne, destiné à filtrer de l'air, avec un boîtier de filtre (12) présentant une zone côté brut (14) et une zone côté pur (15), une cartouche filtrante principale (100) insérable dans le boîtier de filtre (12) et dotée d'une surface d'afflux de la cartouche filtrante principale (110), un sens de flux de la cartouche filtrante principale (X1) vertical par rapport à la surface d'afflux de la cartouche filtrante principale (110), une surface d'écoulement de la cartouche filtrante principale (112) et un joint (116) disposé sur une surface d'étanchéité (114) et destiné à séparer de manière étanche aux fluides la zone côté brut (14) de la zone côté pur (15) du boîtier de filtre (12), et avec une cartouche filtrante secondaire (200) disposée en aval de la cartouche filtrante principale (100) selon l'une des revendications précédentes, avec une surface d'afflux de la cartouche filtrante secondaire (210), un sens de flux de la cartouche filtrante secondaire (Y1) et une surface d'écoulement de la cartouche filtrante secondaire (212), la surface d'étanchéité (114) étant disposée de manière oblique par rapport au sens de flux de la cartouche filtrante principale (X1) de la cartouche filtrante principale (100), la surface d'étanchéité (114) et le sens de flux principal (X1) formant un angle compris entre 80° et 10°.

13. Filtre selon la revendication 12, la surface d'étanchéité (114) et la surface d'écoulement de la cartouche filtrante principale (112) étant parallèles et notamment situées sur un seul et même plan.

14. Filtre selon l'une des revendications 12 à 13 précédentes, la surface d'afflux de la cartouche filtrante secondaire (210) étant parallèle à et espacée de la surface d'étanchéité (114), l'espace ménagé étant notamment inférieur à 2 cm et mesurant notamment 1 cm.

15. Filtre selon l'une des revendications 12 à 14 précédentes, le boîtier de filtre (12) présentant un sens d'afflux (X), un sens d'écoulement (Y) et une zone d'écoulement (24) avec une ouverture d'écoulement, et une tubulure d'écoulement (26) pouvant être fixée à la zone d'écoulement (24), la zone d'écoulement (24) présentant une surface de fixation (25) pour la tubulure d'écoulement (26) et la surface de fixation (25) formant un angle de 45° avec le sens de flux de la cartouche filtrante principale (X1).
